# EUROPEAN PATENT SPECIFICATION

(11) **EP 0 500 123 B1**
(45) Date of publication and mention of the grant of the patent: **27.09.1995**
(21) Application number: 92102947.6
(22) Date of filing: 21.02.1992
(51) Int. Cl.: F02F 1/42, F02B 31/00

(54) **Induction system for an internal combustion engine**
Einlasssystem für eine Brennkraftmaschine
Système d'aspiration d'un moteur à combustion interne

(30) Priority: 21.02.1991 JP 47436/91; 30.08.1991 JP 247018/91; 30.08.1991 JP 247015/91
(43) Date of publication of application: 26.08.1992
(73) Proprietor: YAMAHA HATSUDOKI KABUSHIKI KAISHA, Iwata-shi Shizuoka-ken, 438 (JP)
(72) Inventor: Isaka, Yoshiharu, c/o Yamaha Hatsudoki K. K., Iwata-shi, Shizuoka-ken 438 (JP)
(74) Representative: Grünecker, Kinkeldey, Stockmair & Schwanhäusser Anwaltssozietät

(56) References cited:
- EP-A- 0 054 964
- EP-A- 0 068 481
- EP-A- 0 235 288

## Description

### BACKGROUND OF THE INVENTION

This invention relates to an induction system for an internal combustion engine and more particularly to a tumble control valve for the intake port of an internal combustion engine.

As is well known, most internal combustion engines are called upon, in their application, to operate over widely varying speed and load ranges. This is particularly true in connection with vehicular applications such as automobiles and motorcycles. As is also well known, because of this speed and load variation over which the engine is operated, there are many compromises in the design of the engine. This is particularly true in the area of the induction system.

It has been well known that combustion at low engine speeds and low engine loads can be significantly improved with attendant improvements in fuel economy and exhaust emission control if a high degree of turbulence is induced into the intake charge and in the combustion chamber. However, all turbulence increasing devices in the induction system tend to offer some flow resistance. Therefore, the use of turbulence increasing devices in the induction system reduces the maximum power output of the engine. Thus, most induction systems are designed as compromise between good low speed performance and good high speed performance.

One form of turbulence which is generated in the combustion chamber is characterized as "swirl". Swirl is a flow of the charge in the combustion chamber in a generally circumferential direction around the axis of the cylinder. Swirl is generally generated by use of swirl ports in the induction system. However, the generation of swirl can reduce the volumetric efficiency at high speed. This is because swirl ports have higher flow resistance than non-swirl ports. In addition, there are some phases of running of the engine when swirl is not desirable even though some form of motion of the charge in the chamber is desirable.

Another form of motion in the combustion chamber is called "tumble". Tumble is a swirling motion of the intake charge about an axis that generally extends transversely to the cylinder bore axis. With such a flow arrangement, the charge tends to flow across the cylinder head, down one side of the cylinder bore, back across the cylinder bore across the top of the head of the piston and then up the other side of the cylinder bore back to the cylinder head with this flow pattern repeating. This type of motion also requires the formation of a specially formed port which will provide flow resistance and reduce volumetric efficiency under high speed. Like swirl, tumble is more effective at some speed than other speeds.

Of course, even more turbulence may be generated in the intake charge if both swirl and tumble can be generated at the same time. However, generating both such motions through a single port configuration can further increase the flow resistance and reduce high speed performance.

One way in which the flow pattern in the combustion chamber can be varied under varying speed and load conditions is to provide a control valve in the induction passage that changes the effective configuration of the induction passage as the control valve is moved. The control valve can then be moved in response to varying speed and load conditions so as to provide the desired flow pattern. Such arrangements, however, as previously proposed have only permitted the establishment of either one type of swirling motion (either swirl or tumble) or substantially no turbulence.

One technique for changing the flow pattern from an intake passage in an internal combustion engine employs an additional passage that intersects the main intake passage upstream of the valve seat and through which another higher velocity flow is established. (see EP-A-235 288) However, like other flow altering devices, there are some running conditions when it is not desirable to have this small port be effective. This can be done through the provision of a control valve but if another control valve is also employed for changing the effective configuration of the port, then the engine becomes very complicated. Furthermore, it may be physically impossible to employ two such valves in the cylinder head of an engine, where the intake port is normally formed.

As has been noted, one way in which the flow patten within a combustion chamber may be altered is by providing a control valve that operates in the intake passage of the engine. However, where such a control valve is provided, even when the control valve is in a wide open position, some obstruction to the flow through the intake passage may occur. This can be either by direct flow resistance of the valve or a mounting portion of it extending into the induction passage even when the valve is fully opened. In addition, the control valve in its fully open position or some portion associated with it can give rise to a less than smooth intake passage which will induce turbulence within the intake passage itself and, accordingly, adversely effect volumetric efficiency.

In connection with the use of a control valve for controlling and altering the flow through an intake port, the control valve can be subject to heating during operation of the engine. If there are too large a temperature gradient created between the control valve and the supporting portion of the cylinder head, binding in the control valve operation may result.

There are a number of advantages to employing rotary control valves for the intake passage of an internal combustion engine. Where the engine has overhead valves, it is also desirable to have the rotational axis for the control valve extend transversely to the intake passage. However, when this is done, the added components to the cylinder can present problems in connection with placement and operation.

The problems in placement of the control valves in the cylinder head are further magnified if the engine employs twin overhead camshafts, as is typical with high performance engines. That is, with normal camshaft placements the addition of a control valve for the intake port and the fastening arrangements can give rise to some problems.

Accordingly, it is the objective of the present invention to provide an improved induction system for an internal combustion engine which permits the generation of a swirl and/or tumble depending upon the running conditions of the engine. Moreover, specifically the new system should allow the appropriate disposal of the valve element controlling the intake passage side of the engine in the cylinder head and should assure reliable operation of said valve element also under high-speed running conditions wherein a considerable heat transfer from the combustion chamber occurs. Moreover, the invention should provide the prerequisite to appropriately locate the control valve element without interference from the arrangement for affixing the cylinder head to the cylinder block of the engine.

In order to perform said objective, the induction system, according to the present invention, comprises a tumble control valve which is preferably in the shape of a rod and rotatably supported at the lower side of the intake passage arrangement in the cylinder head wherein the axis of rotation of the tumble control valve extends parallel to camshaft axes and a tumble control valve coolant jacket is provided adjacent to the tumble control valve.

According to the preferred embodiment of the present invention, the control valve comprises a rod shaped body having control cut-outs for controlling at least a plurality of intake passages either associated to a single or to a plurality of cylinders.

According to yet another preferred embodiment of the present invention, the control valve coolant jacket comprises at least one upper coolant jacket portion defined in the cylinder head and one lower coolant jacket portion defined in the cylinder block both being communicated through a communicating portion.

Alternatively, vapourization of a desirable residual fuel in the area of the cut-outs of the control valve member, the coolant jacket structure may be such that there is only an upper coolant jacket provided above the control valve, while the region between the control valve and the combustion chamber does not provide a further coolant jacket portion.

According to yet another embodiment, however, for certain embodiments of the control valve, it may be more advantageous to block heat transfer from the combustion chamber to the control valve as far as possible and, accordingly, a control valve coolant jacket only comprises a coolant jacket portion at the combustion side of the control valve.

According to another advantageous embodiment of the present invention, the cylinder head is bolted to the cylinder block and crankcase of the engine such that the rows of intake side and exhaust side studs each have a different distance from a vertical plane containing the axes of the cylinder bores such that between said plane and another vertical plane containing the axes of the intake side studs, more space is provided than given on the opposite exhaust side in order to appropriately dispose the control valve between said plane containing the axes of the intake side studs (head bolts) and an intake valve axis. Specifically if a common valve member is used for a plurality of cylinders to control the intake passage arrangements of each cylinder, such a structure can be advantageous to avoid interference of the cylinder head bolting structure with said control valve.

Otherwise there may be applications wherein it is preferred to locate the control valve in the cylinder head outside of a plane containing the axes of the intake side studs, as it may be suitable for engines having a high compression ratio locating the fasteners under the intake camshaft close to the bight of the intake passage to make the effective valve angle narrow.

Other preferred embodiments of the present invention are laid down in the subclaims.

In the following, the present invention is explained in greater detail by means of several embodiments thereof in conjunction with the accompanying claims therein:
Figure 1. is an end elevational view of an internal combustion engine in accordance with the embodiment of the present invention with portions broken away and shown in a cross section, certain portions of the engine are eliminated and certain of its controls schematically,
Figure 2. is a further enlarged cross sectional view taken along a plane parallel to the plane of Figure 1. through one of the threaded fastening means,
Figure 3. is a cross sectional view taken along a plane perpendicular to the plane of Figure 2. and passing through the threaded fastening means,
Figure 4. is an enlarged cross sectional view taken along the line 4-4 of Figure 1,
Figure 5. is a view, in part similar to Figure 1, showing another embodiment of the invention,
Figure 6. is an enlarged cross sectional view taken along the line 6-6 of Figure 5,
Figure 7. is an enlarged cross sectional view taken along the line 7-7 of Figure 5,
Figure 8. is a cross sectional view, in part similar to Figure 7, and shows another embodiment of the invention,
Figure 9. is a view. in part similar to Figures 1 and 5, and is taken along the line 9-9 of Figure 10 and shows still another embodiment of the invention,
Figure 10. is an enlarged cross sectional view taken through the intake passages of this embodiment,
Figure 11. is a cross sectional view taken along the line 11-11 of Figure 10,
Figure 12. is a graphical view showing how the various valves are operated in conjunction with this embodiment in relation to valve opening and engine speed,
Figure 13. is a cross sectional view, in part similar to Figure 10, and shows a still further embodiment of the invention,
Figure 14. is another embodiment of the present invention comprising a valve seat rectifier plate arrangement.

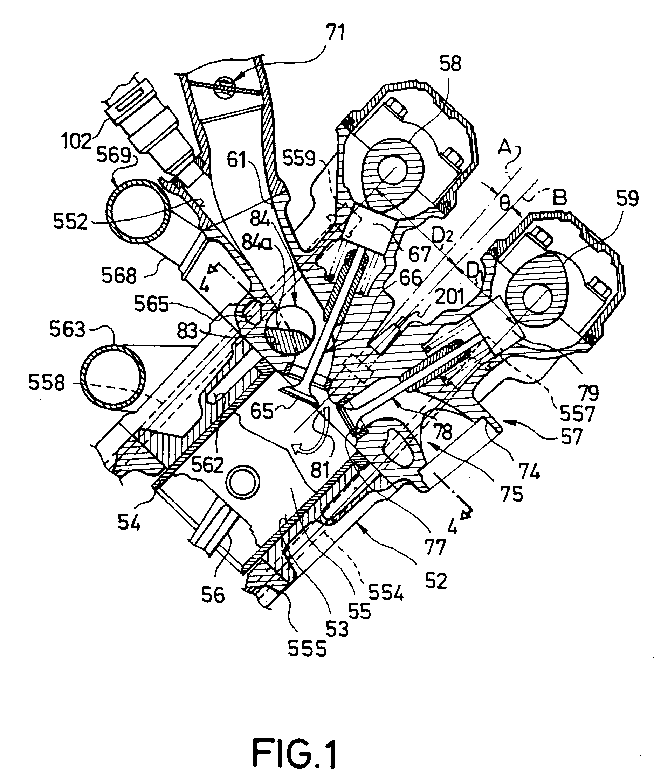

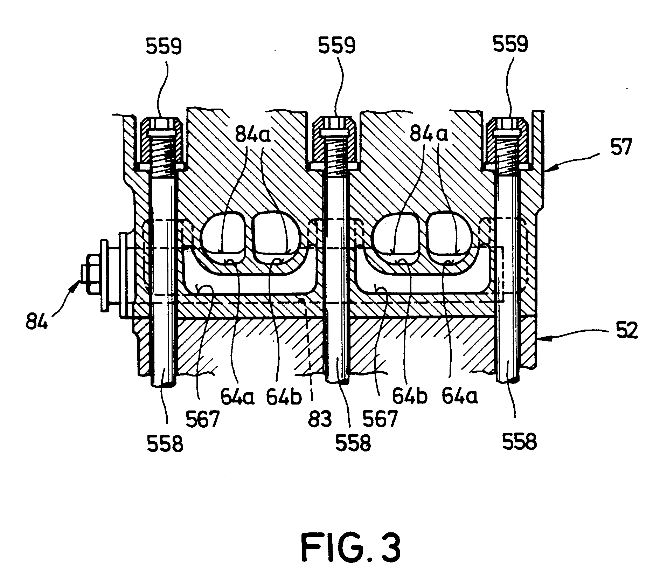

Referring now in detail to the drawings and initially to the embodiments of Figures 1 and 3, and internal combustion engine constructed in accordance with this embodiment is identified generally by the reference numeral 51. In this embodiment, like the other embodiments to be described, the engine 51 is of the four cylinder, inline, twin overhead camshaft 4 valve per cylinder type. Although the invention is described in conjunction with an engine having this configuration, it should be readily apparent to those skilled in the art how the invention can be practiced with engines of other configurations. Also since the invention deals primarily with induction system and the air flow pattern created within the combustion chambers, only the upper portion of the engine has been depicted and, in most instances, only a single cylinder of the engine is shown. It is believed that those skilled in the art will understand how the invention can be practiced with complete engines and engines of other cylinder numbers and types, as aforementioned.

The engine 51 includes a cylinder block, indicated generally by the reference numeral 51 that has aligned cylinder bores 53 formed by pressed or cast in cylinder liners 54. Pistons 55 reciprocate in the cylinder bores 53 and are connected to a crankshaft (not shown) by means of connecting rods 56 in a well known manner.

A cylinder head assembly, indicated generally by the reference numeral 57 is affixed to the cylinder block 52 in a suitable manner and rotatably journals a pair of camshafts 58 and 59 which are driven at half speed from the crankshaft in any well known manner. In certain embodiments of this invention, as will become apparent, the engine 51 is divided into two separate paired cylinder block portions that are separated by the drive for the camshafts 58 and 59. Of course, and as will be described later, the camshafts 58 and 59 may be driven off one end of the engine if desired.

A siamesed type of intake passage, indicated generally by the reference numeral 61 extends through one side of the cylinder head 57 from an intake port 62 and then is divided by an internal wall 63 into a pair of passages 64a and 64b that terminate at individual valve seats 65a and 65b the flow through which is controlled by a respective intake valve 66 that is directly actuated by the intake camshaft 58 via thimble tappets 67.

In this embodiment, a charge former in the form of a fuel injector 102 is provided which injects into a passageway 522 formed on the lower or outer sides of the intake passages 61 and toward a control valve element 84 of a swirl and/or tumble control valve. Optionally, one or two fuel injectors may be provided for each cylinder. The spray axis of the fuel injector 102 extends inclined with respect to the control valve element 84 and above same to inject the fuel downstream of the main throttle valve 71 which is operated manually.

Since the injector 102 sprays into the intake passage 64a, which has the greater velocity when the control valve 84 is in its closed position, there will be good distribution of the fuel in the combustion chamber and good combustion.

The fuel injector 102 can be disposed such to spray only in one of a pair of breached intake passages 64a,64b or can simultaniously charge both of said pair of intake passages 64a,64b leading to respective intake valve seats 65a,65b.

An exhaust port 74 is formed in the other side of the cylinder head 57 and is divided into a pair of exhaust passages 75 by a dividing wall 76. Valve seats 77 at the base of the passages 75 cooperate with exhaust valves 78. The exhaust valves 78 are operated directly by the exhaust camshaft 59 through thimble tappets 79.

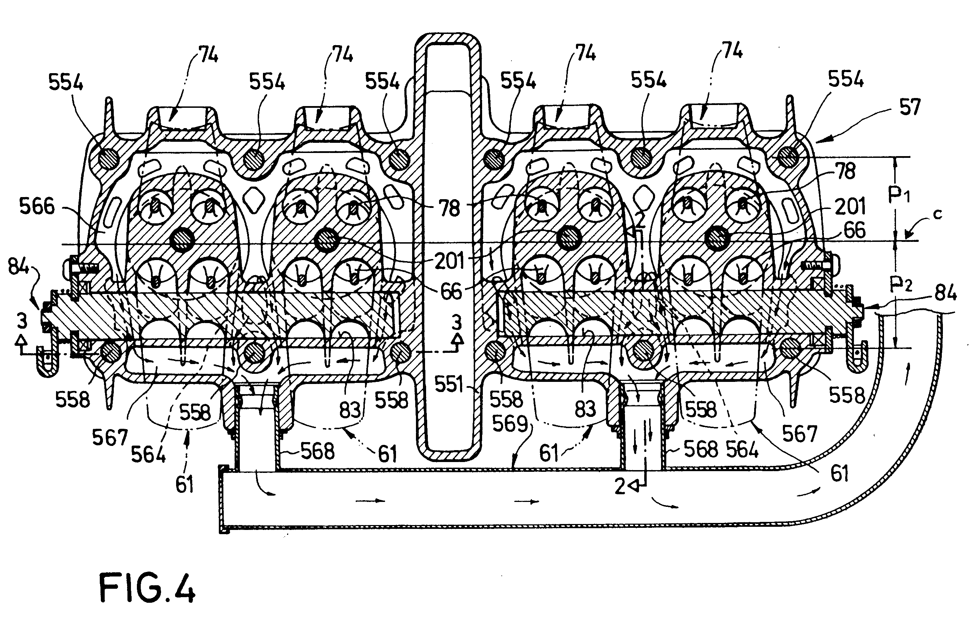

There is further mounted a spark plug 201 in a plane (B) of the cylinder head 57 inclined at an angle ϑ from a plane (A) which is perpendicular to the lower ceiling surface of the cylinder head 51. These planes intersect at the point of mating so that the exhaust camshaft 59 is offset at a lesser distance D1 from the axis of the cylinder bore than the axis of rotation of the intake camshaft 58 indicated by the dimension D2. The cylinder bore axes are shown at the plane c in Figure 4. This offsetting relationship is desirable, for a reason which will be described so as to facilitate the placement of the control valve 84 without interfering with the threaded fasteners that fix the cylinder head 57 to the cylinder block 52.

The combustion chamber is indicated generally by the reference numeral 81 and the engine layout is such that the spark plug is disposed centrally between the heads of the intake and exhaust valves 66 and 77, respectively.

The intake passages 64a and 64b are configured so that they are substantially parallel to each other and are comprised of first and second angularly related portions that are merged at a bight. One section, that leading from the port opening 62, extends generally horizontally although it is inclined somewhat downwardly while the other portion, which terminates at the valve seat 65, extends generally parallel to the axis of the cylinder bore (A) and hence the charge issuing from the intake passages 64a and 64b will generally flow along the axis of the cylinder bore (A) and will effect little turbulence in the intake charge. This will provide extremely good volumetric efficiency.

However, it is desirable to provide a high degree of turbulence to the intake charge, particularly at low and mid range performance so as to insure rapid flame travel in the combustion chamber and complete combustion. To this end, there is provided the control valve 84 already mentioned above which is disposed at the bight of the intake passage portions and which will redirect the flow in such a manner as to create turbulence in the combustion chamber. This turbulence is created by generating both a swirl around the axis of the cylinder bore axis (A) and also a tumble that will cause the air to flow from the valve the seat 65 toward the opposing wall of the cylinder bore 53, be there deflected downwardly across the head of the piston 55 back toward the cylinder bore wall adjacent the valve seat 65 and then upwardly and back across the cylinder head 57 in the manner as previously described. The arrow in Figure 1 indicates this tumble motion.

The control valve 84 in formed in part by means of a bore 83 that extends transversely across the cylinder head 57 perpendicular to the cylinder bore axis (A) and at the lower side of the bight between the intake passage portions forming the passages 64a and 64b. The control valve member, 84 is rotatably supported in this bore 83 and is provided with cut outs 84a.

The bore 83 is a blind bore for the two cylinders at each side of the engine and it may be seen how the valve parts are easily inserted. They are held in position axially by means of a locating sleeve which is held in position by a set screw. An actuating lever is affixed to the exposed end of each valve shaft 84 and is connected by moans of a wire transmitter to the connecting assembly so as to be operated in a sequence with the throttle valve 71. The control valve 84 and specifically the valve element is moveable between two positions. The first of which is shown in figures 1 and 3 wherein the control valve cut outs 84a partially obscure the intake passages 64a and 64b on their lower side so as to direct the charge flowing there through to the opposite side of the valve seat 65 so that the charge will tend to enter the combustion chamber in a direction flowing toward the opposing surface of the cylinder bore 53, as aforenoted. The cut out portions 84a may have a different or equal diameters to obstruct intake passages 64a and 64b. This will create a swirl to the intake charge in the circumferential direction around the cylinder bore axis.

Hence, when the valve portions 84a and 84b are in the position shown in Figures 1 and 3, great turbulence will be added to the intake charge due to its swirl and tumble motion, as aforedescribed. The control valve 82 is held in this position when the throttle valve 71 are at their idle position and as the opening of the throttle increases, the control valve 82 and specifically its element 84 will be opened. The motion is such that the control valve 84 is opened fully long prior to the full opening of the throttle valve 71.

When the control valve 84 is in its fully opened position, the surfaces of the control valve will be clear of the intake passages 64a and 64b and there will be no obstruction to air flow and good volumetric efficiency will result. When the valve element 84 is in its fully opened position, the cut out portions 84a and 84b will provide a smooth surface across the bight connecting the intake valve portions 64a and 64b so that there will be no obstruction to the flow when the valve element 84 is in this position.

The present invention provides an improved arrangement of the control valve (valve element 84) between a head bolt (cylinder head fastener) and a shaft of an intake valve 66. As indicated above the offsetting of the spark plug 201 facilitates said placement of the control valve element 84.

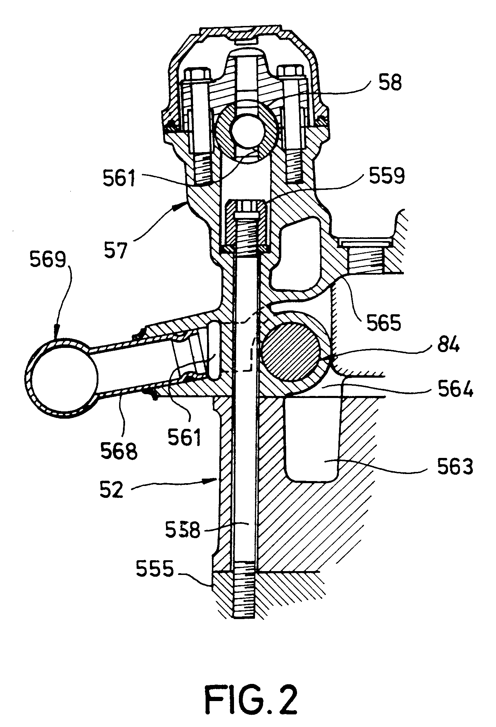

A plurality of exhaust side studs 554 are disposed on the exhaust side of the engine and are threaded at their lower ends into a crankcase member 555. These exhaust side studs 554 pass through bores in the cylinder block 52 and corresponding bores in the cylinder head 57 and lie on a perpendicular plane that contains the axis of rotation of the exhaust camshaft 59. Hence, these elements are aligned and lie at the distance P1 from the cylinder bore axis lying on the plane c. Socket headed nuts 557 are threaded onto the upper ends of the exhaust sides studs 554 and hold this side of the cylinder head 57 to the cylinder block 52 and crankcase 555. These socket headed nuts 557 may be accessed through openings in the exhaust camshaft 59 like those associated with the intake camshaft as may be best understood by particular reference to Figure 2.

On the intake side of the engine and in line with the axis of rotation of the intake camshaft 58 there is provided a series of intake side studs 558 which are threaded at their lower ends into the crankcase 555 and pass through corresponding bores in the cylinder block 52 and cylinder head 57. Socket headed nuts 559 affix these elements to each other. The bores in the camshaft through which the socket headed nuts 558 may be accessed are shown at 561 in Figure 2.

As may be readily seen in the figures, the greater distance in positioning of the intake studs 558 from the plane c containing the cylinder bore axes than the distance between the exhaust studs 554 and this axis provides ready clearance for the control valve 84 without any interference.

Like all of the illustrated embodiments of this invention, the engine is water cooled and the cylinder head and cylinder block are each formed with respective cooling jackets. In accordance with this embodiment of the invention, portions of these cooling jackets extend in proximity to the control valve 84 for cooling it.

The cylinder block cooling jacket includes a lower portion 562 that generally extends around the cylinder liners 54 and to which water is delivered from a remotely positioned radiator by a water pump through an engine cooling jacket inlet 563. This cooling water then flows upwardly to an upper cylinder block cooling jacket portion 563 (Figure 2) that extends along the under side of the cylinder head in proximity to the bore 83 and supported control valve 84. This cooling water then flows through apertures 564 formed in the lower surface of the cylinder head 57 to a further cooling jacket portion 565 formed in the cylinder head 57 around the bore 83 and around the control valve 84. This coolant is then free to also pass through the main cylinder head cooling jacket portion 566. Additional coolant is delivered to the cooling jacket portion 566 through other passages that communicate the cylinder block cooling jacket 562 with these portions.

Coolant is then discharged on the opposite side of the control valve 84 to a pair of longitudinally extending cooling jackets 567 formed adjacent an outer surface of the cylinder head 57 and which communicate with pipes 568 of a coolant manifold, indicated generally by the reference numeral 569 and which lies at the intake side of the cylinder head 57. This coolant is then returned back to the heat exchanger in an appropriate manner and a thermostat (not shown) may control this flow to maintain the desired temperature of the engine.

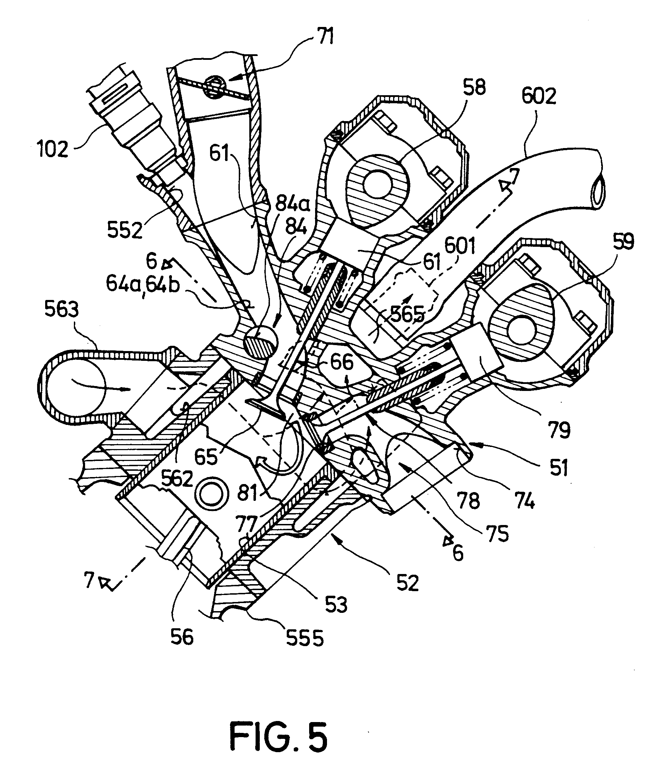

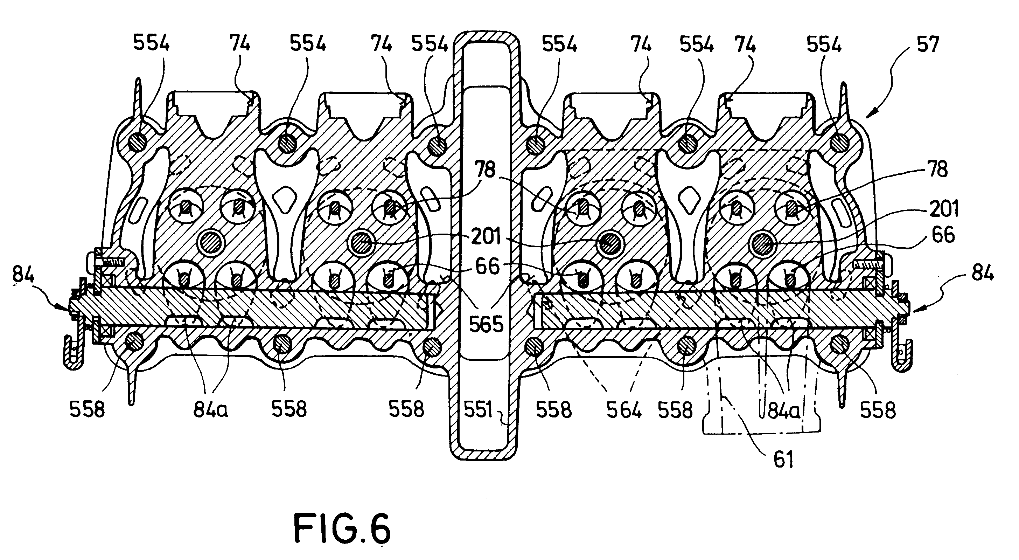

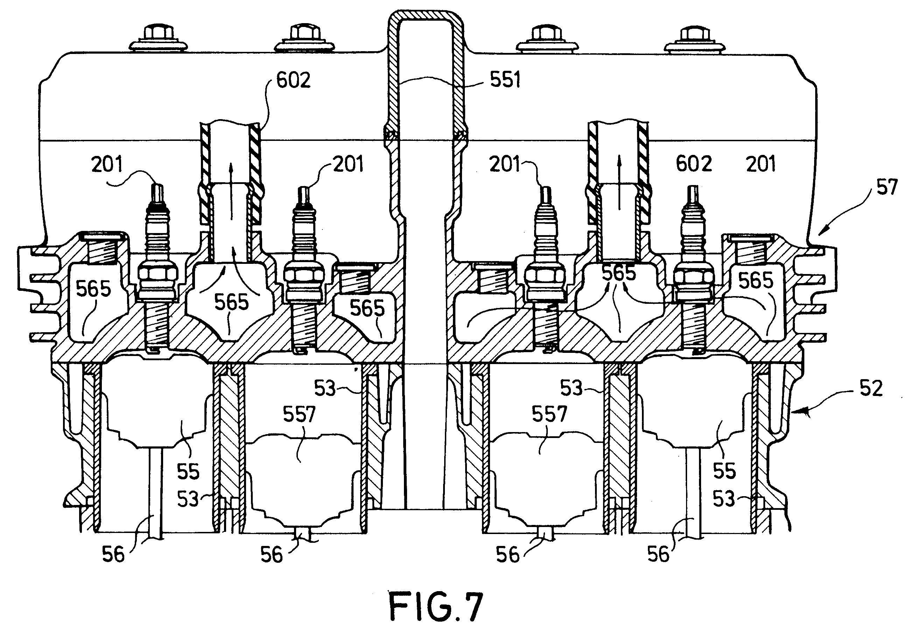

Figures 5 through 7 show another embodiment of the invention which is generally the same as the embodiment of Figures 1 through 4 and, for that reason, components which are the same have been identified by the same reference numerals. This embodiment differs from the previously described embodiment only in two regards. First, it eliminates the cylinder block upper cooling jacket portion 563 that forms an area for cooling the control valve 84. Also, the cylinder head cooling jacket portions 565 have a pair of outlet nipples 601 in this embodiment that are disposed between the pairs of spark plugs 201 of the adjacent groups of cylinders. Flexible hoses 602 carry coolant from these cooling jacket outlets 601 to the remotely positioned radiator.

Although not further reflected in the present embodiments, it may also be sufficient to provide a coolant jacket portion at the combustion chamber side thereof. Thus, minimizing heat transfer from the combustion chamber to the control valve.

On the other hand, it may be desirable to provide a cooling jacket portion only above the control valve 84 in order to allow fuel to vaporize which may have accumulated at the area of the area of the cut-out of control valve which face downwardly when the control valve is closed under low load conditions etc. Thus, the fuel can be reliably prevented from accummulating on said cut-out portion of the control valve 84 as heat transfer from the combustion engine is possible to a certain extent.

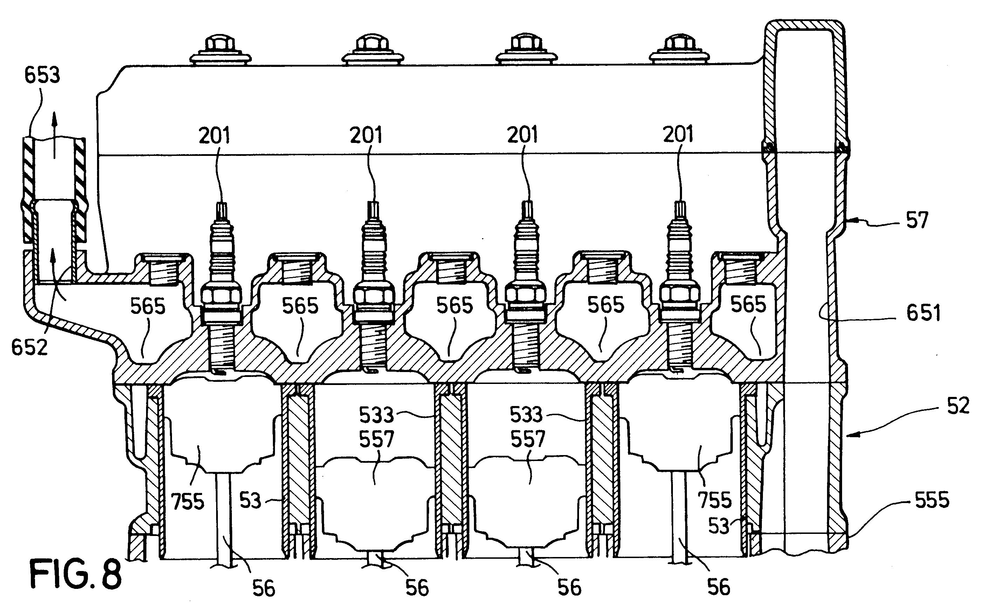

Figure 8 shows another embodiment that is similar to the embodiment of Figures 5 through 7 In this embodiment, however, the engine is not divided into two separate groups of cylinder banks by the camshaft drive cavity 551. Rather, the camshaft drive is provided in a cavity 651 disposed at one end of the engine, in a well known fashion. As a result of this arrangement, a single coolant outlet nipple 652 may be formed at the opposite end of the cylinder head 57 and collect water from all of the cylinder head cooling jacket portions 565 for return to the remotely positioned radiator through a conduit 653.

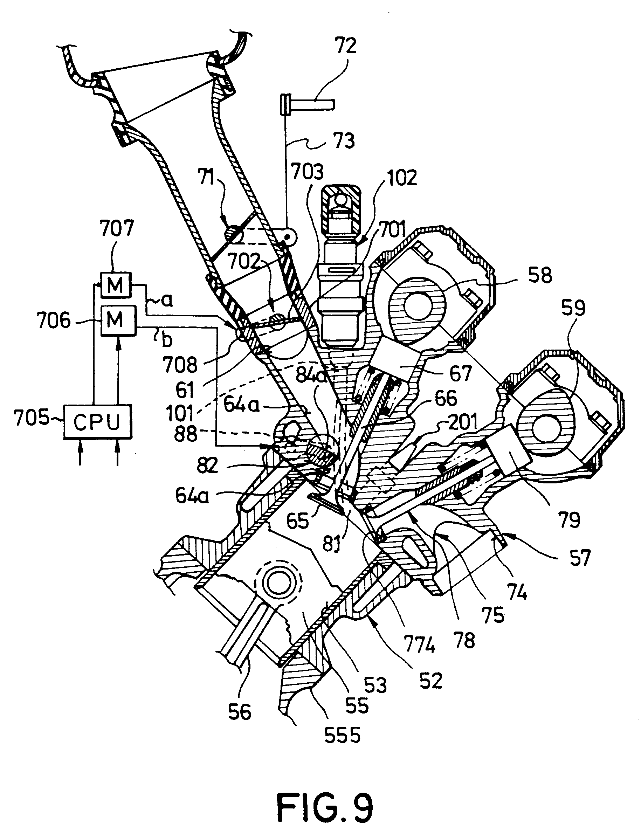

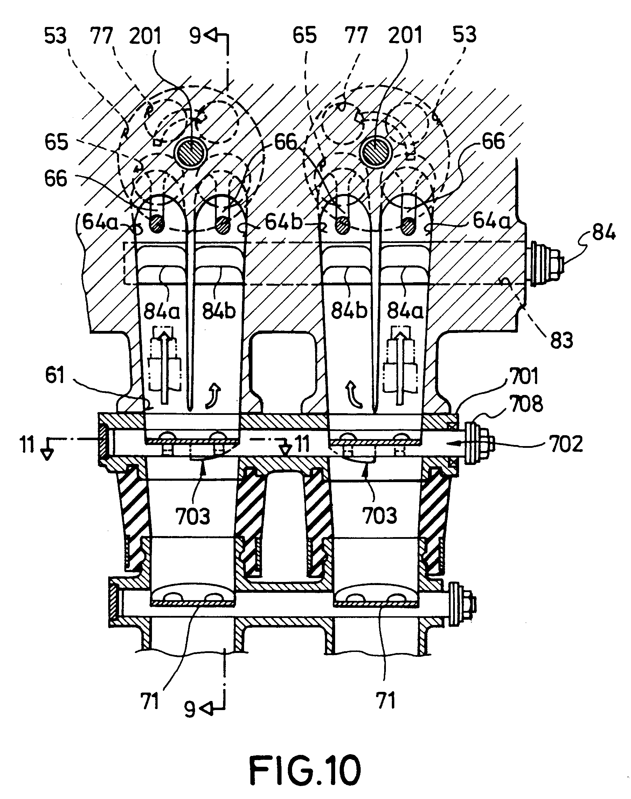

In the embodiment of the invention as thus far described, the control of the flow of air entering the combustion chamber of the engine has been effected primarily by a single control valve which may control one or both intake passages communicating with the respective cylinder. Total engine speed is controlled by a single throttle valve upstream of this control valve. Although this arrangement has great utility, further improvement in control of the flow and providing varying flow patterns may be achieved through the the of an additional control valve and Figures 9 through 12 show another embodiment using such an additional throttle valve. This arrangement may be employed with any of the types of constructions thus far described but since the embodiment of Figures 4 through 12 has most similarity to the embodiment of Figures 1 and 3 the reference numerals applied to the components in that figure have been applied to the components in this figure and will not be described again, except to show the relationship between these components and those added by way of this embodiment. Also, this embodiment employs fuel injection wherein a fuel injector 102 sprays only into the induction passage 64a.

However, the invention can be employed with other types of charge forming systems, as will be readily apparent to those skilled in the art.

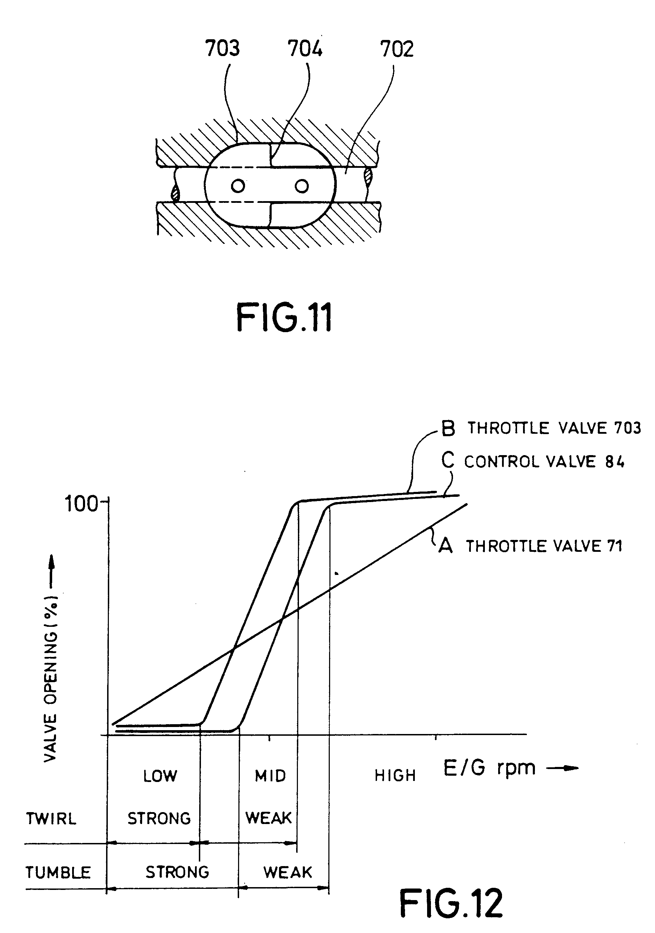

In this embodiment, a further throttle body 701 is interposed between the cylinder head intake ports openings 62 and the throttle body in which the throttle valve 71 are supported. The further throttle body 701 supports a throttle valve shaft 702 to which a pair of throttle valves having a configuration as best shown in Figure 11 are fixed and which throttle valves are indicated generally by the reference numeral 703. The throttle valves 703 have cut out portions 704 so that they will offer no restriction in either position to the flow through the intake passages 64a. However, the non-cut out portions of the throttle valves 703 will obscure the flow through the intake passages 64b when the throttle valves 703 are in their fully closed position as shown in Figure 11.

The control of the control valve 84 and the throttle valves 703 is done by means of a CPU, indicated schematically by the reference numeral 705. The CPU 705 receives an input indicative of engine speed, as provided by an engine speed sensor that cooperates with the engine crankshaft in a manner as previously described and input indicative of the position of the throttle valve 71. The CPU output signals to two stepper motors 706 and 707. The stepper motor 706 is connected by means of a connection indicated by the letter b to the control lever 88 of the control valve 84. The stepper motor 707 is connected by means of a connection indicated by the letter a to a lever 708 that is connected to the throttle valve shaft 702. The sequence of operation of opening and closing of the respective throttle valves may be understood by reference to Figure 12.

Figure 12 shows the relation of the valves 71, 84 and 703 between their fully closed position 0% and their fully opened position 100% in relation to engine speed. Also shown are the respective swirl and tumble conditions. As may be seen, the throttle valve 71 is opened in linear fashion and during initial opening of the throttle valve 71, as aforenoted, the control valve 84 and also, in this embodiment, the throttle valve 703 are maintained closed. While both valves are closed there is both strong swirl and strong tumble. As the engine speed increases then, while still in the low range, the throttle valve 703 begins to open. As the throttle valve 703 begins to open, the swirl effect will be reduced while tumble will still be maintained strong.

Finely, a position is reached, before the throttle valve 703 is fully opened, wherein the control valve 84 has begun to open. When this occurs, the tumble will then be weakened and a period where weak tumble and weak swirl are both maintained will occur up through the mid-range performance until all valves are opened at which time there will be substantially no tumble or swirl. This may provide excellent performance throughout the entire engine speed and load ranges.

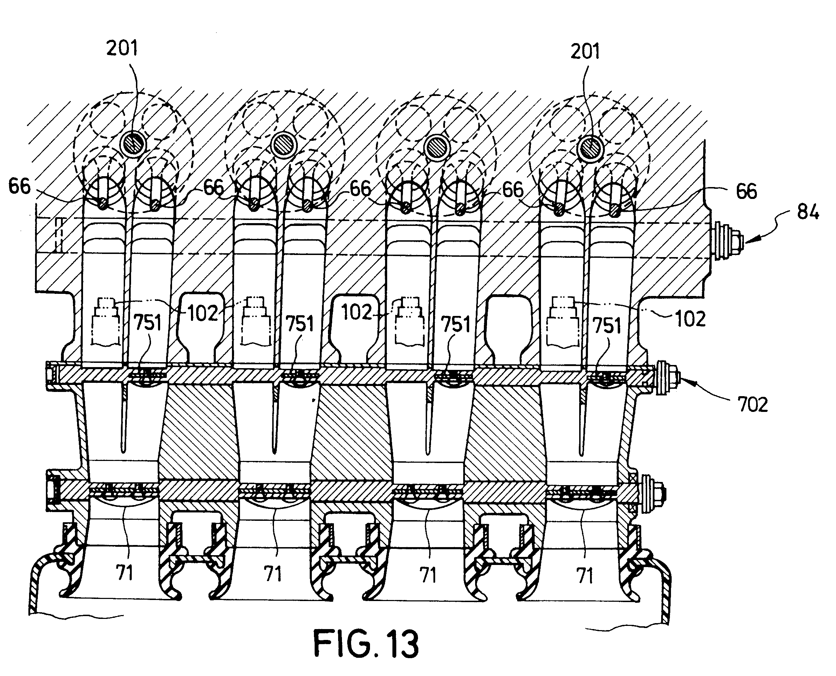

Figure 13 shows yet another embodiment of the invention, which is generally the same as the embodiment of Figures 9 through 12 and differs from that embodiment only in the fact that the added throttle valve in this embodiment only has a single valve plate 751 which cooperates to control the flow through the intake passages 64b. In this way, the restriction of flow through the passages 64a is very low under all conditions and hence even better volumetric efficiency can be achieved. In this embodiment, there are no separate valve bodies but it is to be understood that the invention can be employed in conjunction with arrangements wherein any type of valve body arrangement is incorporated.

In the afore-discussed embodiments, the control valve usually has a construction of the rod type. It is to be understood that this construction may be employed with any of the types of control valves previously described and those providing any type of desired flow pattern. These embodiments also disclose all four cylinders of the engine and shows how that the cylinder block and cylinder head is divided to provide a cam drive chamber 551 disposed between the adjacent center pair of cylinders so as to in effect divide the engine into two, two cylinder engines end to end. Because of this central drive for the camshafts, there is provied a separate control valve element 84 at each end of the engine.

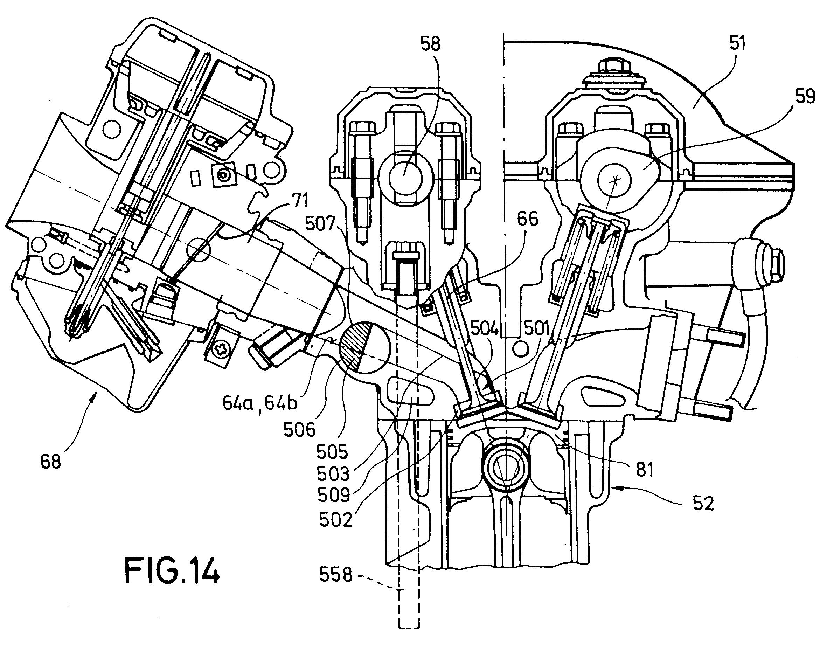

In all of the embodiments as thus far described, the control valve has been positioned at the bight or nearby where the two intake passage portions meet each other and relatively close to the valve seat 65. In this way, the control valves themselves have been able to cause the different flow patterns depending upon their positions. Figure 14 shows another embodiment of the invention that includes an additional device, in the form of a rectifier plate which cooperates with the control valve and specifically its valving surface to further control the air flow.

In this embodiment, one or both intake valves 66 associated with each cylinder cooperates with a valve seat rectifier plate assemblage, indicated generally by the reference numeral 501. This assemblage includes an annular valve seat portion 502 that forms a valve seat as with all of the previously described embodiments. However, a rectifier plate portion 503 extends integrally upwardly from the valve seat portion 502 and into the respective intake passage 64a and/or 64b depending upon whether one or both passages is controlled by a control valve element. The rectifier plate portion 503 is formed with a cut out slot 504 so as to pass the stem of the respective intake valve 66.

A control valve element is depicted and is identified generally by the reference numeral 505. Like the previously described embodiments, the control valve element 505 is supported in a bore 506.

The valve element 505 has a cylindrical portion 507 that is cut out at 508 to form the flow controlling area.

As may be readily seen in Figure 14, when the control valve element 501 is in its first position as shown, the cut out 508 extends to the upper periphery of the rectifier plate portion 503 and all air will be directed to the outer side of the respective inlet passage 64a (as indicated by an arrow) to further improve the tumble action.

With this embodiment, since the rectifier plate portion 503 is formed integrally with the valve seat 502, a separate element inserted into the cylinder head which might become displaced is avoided as is a complicated casting practice. Also, the way in which the valve seat is pressed into the cylinder head will further insure against any displacement of this element.

With this embodiment, also, when operating with the control valve element 505 in its second, fully opened position, the rectifier plate portion 503 also serves the function of providing more laminar flow to the intake charge and improves the volumetric efficiency of the engine and the flow distribution within the individual cylinders.

In this embodiment the control valve element 505 is located at a more upstream position namely, the control valve element 505 having a semi-circular cross-section rotatably supported by a lower wall portion of the intake passages 64a and/or 64b close to an area where the intake passage portions 64a, 64b branch off from the common intake port. In this way the control valve element 505 is no longer supported in the area of the bight of the intake pasage 64a, 64b that in the area of a straight upstream portion of said passage 64a, 64b enabling to arrange a more spacious jacket portion 509 at a position close to the lower side of the control valve element 505. Thus, specifically in embodiments of the present invention where an integral valve seat rectifier plate arrangement 501 is used with the rectifer plate portion 503 extending upwardly into the respective intake passages 64a, 64b, the control valve element 505 will not be disposed directly at the bight of the intake passages 64a, 64b. The embodiment as shown in Fig. 14 might specifically be suitable for engines of high compression ratio as the upstream offset positioning of the control valve element 505 renders it to be disposed outside of the area of the cylinder block intake side studs 558, enabling said intake studs 558 under the intake cam shaft 58 to be disposed close to the bight of the intake passages 64a, 64b rendering the valve included angle narrow and enabling to dispose the control valve element at an area outside of the intake studs 558.

It should be readily apparent from the foregoing description that the described embodiments of the invention are very effective in insuring good engine running under all conditions particularly at low and mid-range speeds by providing good turbulence in the combustion chamber. The type of turbulence achieved can be varied, as aforenoted.

In all of the embodiments of the invention described there have been provided two intake valves for each combustion chamber which have been served by siamesed passages. As should be apparent from the description, the invention can be utilized in conjunction with engines having a single intake port and valve and also may be employed with engines having more than two intake valves such as three valve engines. Also, the invention is not limited to the use with siamese intake passages but may be employed wherein there are separate intake passages for each intake valve.

## Claims

1. Induction system for an internal combustion engine having a cylinder head (57) bolted to a cylinder block (52) at least partially defining a combustion chamber (81), and an intake passage arrangement for each cylinder (53) to serve a plurality of intake valves (66), said intake passage arrangement being controlled by a tumble control valve (84), **characterised in that**, the tumble control valve (84) is rotatably supported at a lower side of the intake passage arrangement (64a,64b) in the cylinder head (57), the engine being considered in an upright position, the axis of rotation of the tumble control valve (84) extending in parallel to a camshaft axis (58) and; in that a tumble control valve (84) coolant jacket (562,563,565) is provided adjacent to the tumble control valve (84).

2. Induction system as claimed in claim 1, **characterised in that**, the control valve (84) comprises a rod shaped valve body having control cut-outs (84a) for controlling at least a plurality of intake passages (64a,64b) of a single cylinder.

3. Induction system as claimed in at least one of the preceding claims 1 or 2, **characterised in that**, the control valve (84) is arranged to control commonly a plurality of intake passages (64a,64b) of a plurality of cylinders.

4. Induction system as claimed in at least one of the preceding claims 1 to 3, **characterised in that**, the control valve coolant jacket comprises at least one upper coolant jacket portion (565) defined in the cylinder head (57) and one lower coolant jacket portion (562) defined in the cylinder block both being communicated through a communicating portion (564).

5. Induction system as claimed in at least one of the preceding claims 1 to 4, **characterised in that**, the control valve coolant jacket only comprises an upper coolant jacket portion above the control valve.

6. Induction system as claimed in at least one of the preceding claims 1 to 5, **characterised in that**, the control valve coolant jacket only comprises a coolant jacket portion at the combustion chamber side of the control valve in order to minimize heat transfer from the combustion chamber to the control valve.

7. Induction system as claimed in at least one of the preceding claims 1 to 6, **characterised in that**, the control valve coolant jacket (562,563,565) forms part of the coolant jacket arrangement of the cylinder head and/or of the cylinder block.

8. Induction system for multiple cylinder internal combustion engine as claimed in at least one of the preceding claims 1 to 7, **characterised in that**, a distance (P2) from a plane (c) passing through the cylinder axes of the cylinders to intake side studs (558) which connect the cylinder head (57), cylinder block (52) and crankcase (555) to each other is set to larger than a distance (P1) from said plane (c) to exhaust side studs (554) connecting the cylinder head (57), cylinder block (52) and crankcase (555) to each other.

9. Induction system as claimed in claim 8, **characterised in that**, the distance (D2) of the intake camshaft (58) from the plane (c) connecting the cylinder axes is set to be larger than the distance (D1) of the exhaust camshaft (59) from said plane (c).

10. Induction system as claimed in at least one of the preceding claims 1 to 9, **characterised in that**, the control valve (84) is disposed at an area defined by planes containing the axes of the intake side studs (558) and the axis of an intake valve (66), specifically is disposed at a bight of an intake passage arrangement (64a,64b).

11. Induction system as claimed in at least one of the preceding claims 1 to 9 **characterised in that**, an valve seat rectifier plate arrangement (501) is provided with a rectifier plate portion (503) extending upwardly preferrably integrally, from a valve seat portion (502) into the respective intake passage (64a,64b) and said control valve (84) is disposed at a lower straight wall portion of the intake passage arrangement (64a,64b) laterally outside of a plane containing the axes of the intake side studs (558).

12. Induction system as claimed in at least one of the preceding claims 1 to 11, **characterised in that**, another auxiliary throttle valve (701) is disposed downstream of the main throttle valve (721), controlling at least a part of the cross-section of the intake passages (64a,64b), said auxiliary throttle body (701) having cut-out portions (704) to prevent an obstruction of one intake passage portion (64a) irrespective of the angular position of the auxiliary valve body (701) but to obstruct the flow through the other of the intake passages (64b) of the induction arrangement in a fully closed position.

## Patentansprüche

1. Ansaugsystem für eine Brennkraftmaschine, die einen Zylinderkopf (57) aufweist, verschraubt mit einem Zylinderblock (52) und zumindest teilweise eine Verbrennungskammer (81) begrenzend, und mit einer Ansaugkanalanordnung für jeden Zylinder (53), um eine Mehrzahl von Einlaßventilen (66) zu versorgen, wobei die Ansaugkanalanordnung durch ein Tumble-Steuerventil (84) gesteuert wird, **dadurch gekennzeichnet,** daß das Tumble-Steuerventil (84) drehbar an einer unteren Seite der Ansaugkanalanordnung (64a, 64b) in dem Zylinderkopf (57) drehbar gelagert ist, wobei der Motor in einer aufrechten Position betrachtet wird, wobei die Drehachse des Tumble-Steuerventiles (84) sich parallel zu einer Nockenwellenachse (58) erstreckt, und daß ein Kühlmittelmantel (562, 563, 565) für das Tumble-Steuerventil (84) benachbart zu dem Tumble-Steuerventil (84) vorgesehen ist.

2. Ansaugsystem nach Anspruch 1, **dadurch gekennzeichnet,** daß das Steuerventil (84) einen stabförmigen Ventilkörper, der Steuer-Ausnehmungen (84a) aufweist, besitzt, zur Steuerung zumindest einer Mehrzahl von Ansaugkanälen (64a, 64b) eines einzigen Zylinders.

3. Ansaugsystem nach zumindest einem der vorhergehenden Ansprüche 1 oder 2, **dadurch gekennzeichnet,** daß das Steuerventil (84) angeordnet ist, um gemeinsam eine Mehrzahl Ansaugkanälen (64a, 64b) einer Mehrzahl von Zylindern zu steuern.

4. Ansaugsystem nach zumindest einem der vorhergehenden Ansprüche 1 oder 3, **dadurch gekennzeichnet,** daß der Steuerventil-Kühlmittelmantel zumindest einen oberen Kühlmittelmantelabschnitt (565) gebildet in dem Zylinderkopf (57) und einen unteren Kühlmittelmantelabschnitt (562) aufweist, der in dem Zylinderblock gebildet ist, wobei beide durch einen Verbindungsabschnitt (564) kommunizierend miteinander verbunden sind.

5. Ansaugsystem nach zumindest einem der vorhergehenden Ansprüche 1 bis 4, **dadurch gekennzeichnet,** daß der Steuerventil-Kühlmittelmantel nur einen oberen Kühlmittelmantelabschnit über dem Steuerventil aufweist.

6. Ansaugsystem nach zumindest einem der vorhergehenden Ansprüche 1 bis 5, **dadurch gekennzeichnet,** daß der Steuerventil-Kühlmittelmantel nur einen Kühlmittelmantelabschnitt verbrennungskammerseitig des Steuerventiles aufweist, um einen Wärmeübergang von der Verbrennungskammer zu dem Steuerventil zu minimieren.

7. Ansaugsystem nach zumindest einem der vorhergehenden Ansprüche 1 bis 6, **dadurch gekennzeichnet,** daß der Kühlmittelmantel (562, 563, 565) des Steuerventiles Teil der Kühlmittelmantelanordnung des Zylinderkopfes und/oder des Zylinderblockes ist.

8. Ansaugsystem für eine Mehrfachzylinder-Brennkraftmaschine nach zumindest einem der vorhergehenden Ansprüche 1 bis 7, **dadurch gekennzeichnet,** daß ein Abstand (P2) von einer Ebene (c), die durch die Zylinderachsen der Zylinder zu den ansaugseitigen Bolzen (558) verläuft, die den Zylinderkopf (57), den Zylinderblock (52) und das Kurbelgehäuse (555) miteinander verbinden, größer festgesetzt ist als ein Abstand (P1) von dieser Ebene (c) zu auslaßseitigen Bolzen (554), die den Zylinderkopf (57), den Zylinderblock (52) und das Kurbelgehäuse (555) miteinander verbinden.

9. Ansaugsystem nach Anspruch 8, **dadurch gekennzeichnet,** daß der Abstand (D2) der Ansaug-Nockenwelle (58) von der Ebene (c), die die Zylinderachsen verbindet, größer festgelegt ist als der Abstand (D1) der Auslaß-Nockenwelle (59) von dieser Ebene (c).

10. Ansaugsystem nach zumindest einem der vorhergehenden Ansprüche 1 bis 9, **dadurch gekennzeichnet,** daß das Steuerventil (84) in einem Bereich angeordnet ist, der durch Ebenen, welche die Achsen der einlaßseitigen Bolzen (558) und die Achse eines Ansaugventiles (66) enthalten, gebildet ist, insbesondere an einer Biegung einer Ansaugkanalanordnung (64a, 64b) angeordnet ist.

11. Ansaugsystem nach zumindest einem der vorhergehenden Ansprüche 1 bis 9, **dadurch gekennzeichnet,** daß eine Ventilsitz-Strömungsplattenanordnung (501) mit einem Strömungsplattenabschnitt (503) vorgesehen ist, der sich aufwärts, vorzugsweise einstückig, von einem Ventilsitzabschnitt (502) in den jeweiligen Ansaugkanal (64a, 64b) erstreckt und das Steuerventil (84) an einem unteren geraden Wandabschnitt der Ansaugkanalanordnung (64a, 64b) seitlich außerhalb einer Ebene angeordnet ist, die die Achsen der ansaugseitigen Bolzen (558) enthält.

12. Ansaugsystem nach zumindest einem der vorhergehenden Ansprüche 1 bis 11, **dadurch gekennzeichnet,** daß ein weiteres Hilfs-Drosselventil (701) stromab des Haupt-Drosselventiles (721) angeordnet ist, das zumindest einen Teil des Querschnittes der Ansaugkanäle (64a, 64b) steuert, wobei der Hilfs-Drosselkörper (701) ausgesparte Abschnitte (704) aufweist, um ein verschließen des einen Ansaugkanalabschnittes (64a) unabhängig von der Winkelstellung des Hilfs-Ventilkörpers (701) zu verhindern, jedoch die Strömung durch den anderen der Ansaugkanäle (64b) der Ansauganordnung in einer vollständig geschlossenen Stellung zu verschließen.

## Revendications

1. Système d'aspiration pour moteur à combustion interne ayant une tête de cylindre (57) boulonnée sur un bloc cylindre (52) définissant au moins partiellement une chambre de combustion (81), et un agencement formant passage d'admission pour chaque cylindre (53) pour servir plusieurs soupapes d'admission (66), ledit agencement formant passage d'admission étant commandé par une vanne (84) de commande de basculement, caractérisé en ce que la vanne (84) de commande de basculement est supportée de manière rotative au niveau d'un côté inférieur de l'agencement (64a, 64b) formant passage d'admission dans la tête cylindrique (57), le moteur étant considéré comme étant dans une position verticale, l'axe de rotation de la vanne (84) de commande de basculement s'étendant parallèlement à un axe (58) d'arbre à cames et en ce qu'une enveloppe (562, 563, 565) de refroidissement de vanne (84) de commande de basculement est agencée adjacente à la vanne (84) de commande de basculement.

2. Système d'aspiration selon la revendication 1, caractérisé en ce que la vanne (84) de commande comporte un corps de vanne en forme de tige ayant des découpes (84a) de commande pour commander au moins plusieurs des passages d'admission (64a, 64b) d'un cylindre unique.

3. Système d'aspiration selon l'une quelconque des revendications 1 ou 2, caractérisé en ce que la vanne de commande (84) est agencée pour commander de manière commune plusieurs passages d'admission (64a, 64b) de plusieurs cylindres.

4. Système d'aspiration selon l'une quelconque des revendications 1 à 3, caractérisé en ce que l'enveloppe de refroidissement de vanne de commande comporte au moins une partie d'enveloppe supérieure (565) de refroidissement définie dans la tête de cylindre (57) et une partie d'enveloppe inférieure (562) de refroidissement définie dans le bloc cylindre, communiquant toutes deux par l'intermédiaire d'une partie de communication (564).

5. Système d'aspiration selon l'une quelconque des revendications 1 à 4, caractérisé en ce que l'enveloppe de refroidissement de vanne de commande comporte uniquement une partie d'enveloppe supérieure de refroidissement située au-dessus de la vanne de commande.

6. Système d'aspiration selon l'une quelconque des revendications 1 à 5, caractérisé en ce que l'enveloppe de refroidissement de vanne de commande comporte uniquement une partie d'enveloppe de refroidissement située au niveau du côté chambre de combustion de la vanne de commande afin de minimiser le transfert thermique depuis la chambre de combustion vers la vanne de commande.

7. Système d'aspiration selon l'une quelconque des revendications 1 à 6, caractérisé en ce que l'enveloppe (562, 563, 565) de refroidissement de vanne de commande forme une partie de l'agencement formant enveloppe de refroidissement de la tête de cylindre et/ou du bloc cylindre.

8. Système d'aspiration pour moteur à combustion interne à plusieurs cylindres selon l'une quelconque des revendications 1 à 7, caractérisé en ce qu'une distance (P2) s'étendant depuis un plan (c) passant par les axes de cylindre des cylindres jusqu'à des goujons (558) situés côté admission, qui relient les uns aux autres la tête de cylindre (57), le bloc cylindre (52) et le carter de vilebrequin (555) est établie pour être plus grande qu'une distance (P1) partant dudit plan (c) jusqu'aux goujons (554) situés côté échappement reliant les uns aux autres la tête de cylindre (57), le bloc cylindre (52) et le carter de vilebrequin (555).

9. Système d'aspiration selon la revendication 8, caractérisé en ce que la distance (D2) de l'arbre à came d'admission (58) à partir du plan (c) reliant les axes de cylindre est établie pour être plus grande que la distance (D1) de l'arbre à came d'échappement (59) à partir dudit plan (c).

10. Système d'aspiration selon l'une quelconque des revendications 1 à 9, caractérisé en ce que la vanne de commande (84) est agencée au niveau d'une zone définie par des plans contenant les axes des goujons (558) situés côté admission et l'axe d'une soupape d'admission (66), de manière spécifique est agencée au niveau d'une courbe d'un agencement formant passage d'admission (64a, 64b).

11. Système d'aspiration selon l'une quelconque des revendications 1 à 9, caractérisé en ce qu'un agencement (501) formant plaque rectificatrice de siège de soupape est agencé ayant une partie (503) de plaque rectificatrice s'étendant vers le haut et de préférence d'un bloc, à partir d'une partie (502) de siège de soupape, à l'intérieur du passage d'admission respectif (64a, 64b) et ladite vanne de commande (84) est agencée au niveau d'une partie de paroi rectiligne inférieure de l'agencement (64a, 64b) formant passage d'admission, latéralement vers l'extérieur d'un plan contenant les axes des goujons (558) situés du côté admission.

12. Système d'aspiration selon l'une quelconque des revendications 1 à 11, caractérisé en ce qu'une autre vanne papillon auxiliaire (701) est agencée en aval de la vanne papillon (721), commandant au moins une partie de la section transversale des passages d'admission (64a, 64b), ledit corps de papillon auxiliaire (701) ayant des parties découpées (704) pour empêcher l'obstruction d'une partie (64a) de passage d'admission quelle que soit la position angulaire du corps (701) de vanne auxiliaire mais pour obstruer l'écoulement traversant l'autre des passages d'admission (64b) de l'agencement d'aspiration dans une position complètement fermée.
